# EUROPEAN PATENT APPLICATION

(11) **EP 2 590 054 A1**
(43) Date of publication of application: **08.05.2013**
(21) Application number: 12161348.3
(22) Date of filing: 26.03.2012
(51) Int. Cl.: G06F 3/01, G06K 9/00, G06F 3/16, G10L 15/26

(54) **Electronic apparatus and method for controlling electronic apparatus using recognition and motion recognition**

(30) Priority: 07.11.2011 KR 20110115084
(71) Applicant: Samsung Electronics Co., Ltd., Suwon-si, Gyeonggi-do, 443-742 (KR)
(72) Inventor: Choi, Chan-hee, Seoul (KR); Ryu, Hee-seob, Gyeonggi-do (KR); Bae, Jae-hyun, Gyeonggi-do (KR); Jang, Jong-hyuk, Gyeonggi-do (KR); Park, Seung-kwon, Gyeonggi-do (KR)
(74) Representative: Clark, David James

(57) **Abstract**

An electronic apparatus and a method thereof are provided. A method for controlling an electronic apparatus includes recognizing a voice signal that is input; and displaying text corresponding to the recognized voice signal on a display unit of the electronic apparatus; and deleting selected text of the text displayed on the display unit in response to a deletion motion that is input while the text is displayed on the display unit.

## Description

### BACKGROUND

### 1. Field

Apparatuses and methods consistent with the exemplary embodiments relate to an electronic apparatus and a controlling method thereof, and more particularly to an electronic apparatus which is controlled by recognition of voice and motion input through a voice input unit and a motion input unit and a method for controlling an electronic apparatus thereof.

### 2. Description of the Related Art

As the number of functions of an electronic apparatus have increased and the functions have become more sophisticated, various user interfaces have been developed to control an electronic apparatus. Methods for controlling an electronic apparatus include inputting text using a remote control, a mouse and a touch pad.

Recently, methods for controlling an electronic apparatus using recognition of a user's voice and motion have been developed. However, related art technologies for controlling an electronic apparatus using recognition of a user's voice or motion correspond to only a few functions of an electronic apparatus and are not designed to be convenient for a user.

In particular, when deleting text in the process of inputting the text using voice recognition, a user is not able to delete a selected area of, a part of, or all of the text using voice recognition and thus, the user has to input the text all over again.

Hence, a new technology which more easily and conveniently helps a user delete input text using voice recognition is needed.

### SUMMARY

Accordingly, exemplary embodiments have been made to solve the above-mentioned disadvantages occurring in the related art and other related disadvantages not described above. One or more exemplary embodiments relate to an electronic apparatus using a deletion motion which is input through a motion input unit in order to delete a text which is input through a voice input unit and a method thereof.

According to an aspect of an exemplary embodiment, there is provided a method for controlling an electronic apparatus, the method including: recognizing a voice signal that is input; displaying text corresponding to the recognized voice signal on a display unit of the electronic apparatus; and deleting selected text of the text displayed on the display unit in response to a deletion motion that is input while the text is displayed on the display unit.

The deleting the selected text may include if the deletion motion is input once, deleting a latest input word from among the text displayed on the display unit.

The deleting the selected text may include if the deletion motion is input once, deleting a latest input letter from among the text displayed on the display unit.

The deleting the selected text may include if the deletion motion is input a predetermined number of times corresponding to a number of words in the text, deleting all of the predetermined number words of in the text displayed on the display unit.

The deleting the selected text may include shifting a location of a cursor displayed in the text in accordance with an input; and deleting a word according to the location of the cursor.

The deleting the selected text may include shifting a location of a cursor displayed in the text in accordance with an input; if a dragging motion is input at a location where the cursor is shifted, displaying an area of text selected by the dragging motion in a distinguishable way and deleting the selected area of the text.

The dragging motion may include positioning a user's hand at a location of the cursor for a predetermined period of time and moving the hand in one of a left direction and a right direction to drag the cursor.

The deletion motion may include rotating a hand of a user in a counterclockwise direction.

According to an aspect of another exemplary embodiment, there is provided an electronic apparatus including: a voice input unit configured to receive a voice and output a voice signal corresponding to the voice; a motion input unit configured to receive a motion ; a display unit; and a control unit which recognizes the voice signal output by the voice input unit, controls the display unit to display text corresponding to the recognized voice signal and in response to a deletion motion that is input to the motion input unit while the text is displayed on the display unit, controls the display unit to delete selected text of the text displayed on the display unit.

The control unit, if the deletion motion is input once, may control the display unit to delete a latest input word from among the text.

The control unit, if the deletion motion is input once, may control the display unit to cancel a latest input letter from among the text.

The control unit, if the deletion motion is input predetermined number of times corresponding to a number of words in the text, may control the display unit to delete all of the number of the words of the text.

The control unit, if a location of a cursor displayed in the text is shifted in accordance with an input and the deletion motion is input, may control the display unit to delete a word at the location of the cursor.

The control unit may control the display unit to shift a location of a cursor displayed in the text in accordance with an input, if a dragging motion is input at a location to which the cursor is shifted, to display an area of text selected by the dragging motion in a distinguishable way and, if the deletion motion is input, to delete the selected area of the text.

The dragging motion may include positioning a user's hand at a location of the cursor for a predetermined period of time and moving the hand in one of a left direction and a right direction to drag the cursor.

The deletion motion may include rotating a hand of a user in a counterclockwise direction.

According to the present invention there is provided an apparatus and method as set forth in the appended claims. Other features of the invention will be apparent from the dependent claims, and the description which follows.

### BRIEF DESCRIPTION OF THE DRAWINGS

The above and/or other aspects will be more apparent from the following detailed description taken in conjunction with the accompanying drawings, in which:
FIG. 1 is a block diagram illustrating a configuration of an electronic apparatus according to an exemplary embodiment;
FIG. 2 is a view illustrating an electronic apparatus according to an exemplary embodiment;
FIGS. 3A and 3B are views illustrating deletion of a word according to an exemplary embodiment;
FIGS. 4A and 4B are views illustrating deletion of all text according to an exemplary embodiment;
FIGS. 5A to 5C are views illustrating deletion of a selected area of text according to an exemplary embodiment;
FIGS. 6A to 6D are views illustrating deletion of a selected area of text according to an exemplary embodiment; and
FIG. 7 is a flowchart illustrating a method for controlling an electronic apparatus to delete input text in accordance with a deletion motion.

### DETAILED DESCRIPTION

Hereinafter, exemplary embodiments will be described in greater detail with reference to the accompanying drawings, in which aspects of the exemplary embodiments are illustrated.

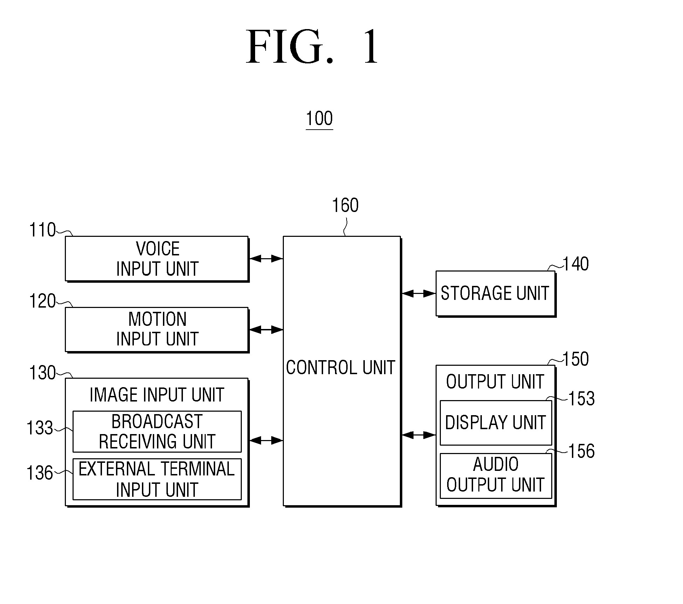

FIG. 1 is a block diagram illustrating a configuration of an electronic apparatus 100 according to an exemplary embodiment. As illustrated in FIG. 1, the electronic apparatus 100 includes a voice input unit 110, a motion input unit 120, an image input unit 130, a storage unit 140, an output unit 150 and a control unit 160. The electronic apparatus 100 may be a television (TV), a tablet personal computer (PC) or a cellular phone, however, these are merely examples and the exemplary embodiment is not limited thereto. The technological feature of an exemplary embodiment may be applied to an electronic apparatus which uses voice recognition and motion recognition.

The voice input unit 110 receives a voice input (e.g., utterance) of a user. The voice input unit 110 changes a received voice signal into an electronic signal and outputs it to the control unit 160. For instance, the voice input unit 110 may be realized as a microphone.

The motion input unit 120 receives an image signal photographing a user's motion (e.g., continuous frames) and sends the image signal to the control unit 160. For instance, the motion input unit 120 may be realized as a camera with a lens and an image sensor.

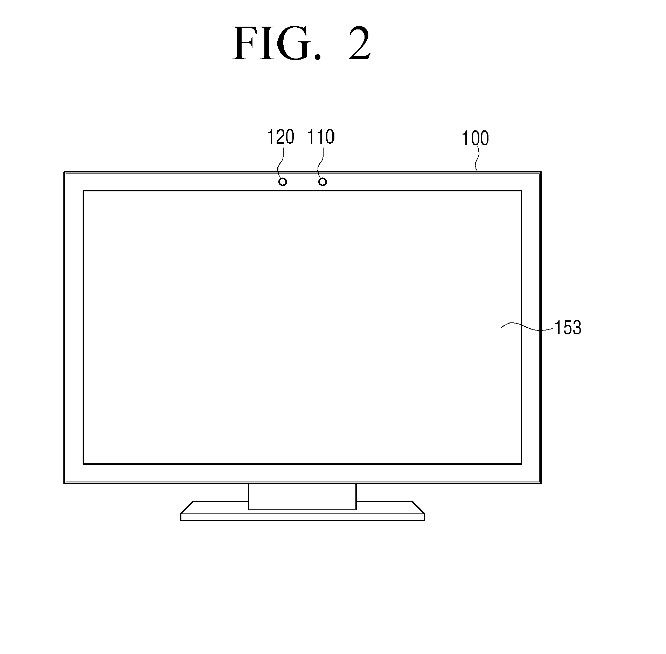

As illustrated in FIG. 2, the voice input unit 110 and the motion input unit 120 may be located in the upper middle side of a bezel which is on the edge of the display unit 153. Yet, it is merely exemplary and the motion input unit 120 may be located in another part or outside of the electronic apparatus 100. If the voice input unit 110 and the motion input unit 120 are separated, the voice input unit 110 and the motion input unit 120 may be wirely or wirelessly connected with the electronic apparatus 100.

The image input unit 130 externally receives an image from. In particular, the image input unit 130 may include a broadcast receiving unit 133 and an external terminal input unit 136. The broadcast receiving unit 133 selects a broadcast channel signal transmitted from an external broadcasting company and processes the selected broadcast channel signal. The external terminal input unit 136 may receive an image signal from an external device, such as a Digital Video Disc (DVD), a Personal Computer (PC), a Set-top box and the like.

The storage unit 140 stores various kinds of data (e.g., a database) and programs to execute and control the electronic apparatus 100. The storage unit 140 stores a voice recognition module and a motion recognition module to recognize a voice and a motion which are input through the voice input unit 110 and the motion input unit 120, respectively.

In addition, the storage unit 140 may store a database including voice data and motion data. The voice database refers to a database which records voices and voice tasks corresponding to voices. A motion database refers to database which records motions and motion tasks corresponding to motions. The tasks of the electronic apparatus 100 refer to functions carried out by the electronic apparatus 100 such as changing a channel, controlling a volume, web-browsing and the like.

The output unit 150 externally outputs a signal-processed image data and an audio data corresponding to an image data. The image data may be output by the display unit 153, and the audio data may be output by the audio output unit 156. The audio output unit 156 may include at least one of a speaker, a headphone output terminal and a Sony/Philips Digital Interconnect Format (S/PDIF) output terminal.

The control unit 160 controls the overall operation of the electronic apparatus 100 in accordance with a user's command. The control unit 160 may control the voice input unit 110, the motion input unit 120, the image input unit 130, the storage unit 140 and the output unit 150 in accordance with a user's command. The control unit 160 may include a module for controlling, such as a Central Processing Unit (CPU). Further, the electronic apparatus 100 may include a Read Only Memory (ROM) and a Random Access Memory (RAM) both of which can store a module.

The control unit 160 may recognize a voice and a motion input through the voice input unit 110 and the motion input unit 120 using a voice recognition module and a motion recognition module, respectively, which are stored in the storage unit 140.

Specifically, if a voice is input through the voice input unit 110, the control unit 160 recognizes the voice using a voice recognition module and a voice database. The voice recognition may be divided by isolated word recognition which recognizes a user's voice input (e.g., utterance) by distinguishing every word in accordance with a form of an input voice, continuous speech recognition which recognizes continuous words, continuous sentences and conversational-style voices, and key word spotting, an intermediate form between isolated word recognition and continuous speech recognition, which detects and recognizes a predetermined key word. If a voice of a user is input, the control unit 160 detects a beginning and an end of a user's utterance in an input voice signal and determines a scope of voice activity.

The control unit 160 calculates energy of an input voice signal, classifies a level of energy of a voice signal in accordance with a calculated energy and detects a scope of voice activity through dynamic programming. The control unit 160 generates data of phoneme by detecting a phoneme, the smallest segmental unit of sound, based on an acoustic model in a voice signal of the detected voice activity. The control unit 160 generates text information by applying the Hidden Markov Model (HMM) to the generated data of a phoneme. Hence, the control unit 160 may recognize a user's voice included in a voice signal.

If a motion is input through the motion input unit 120, the control unit 160 recognizes a motion using a motion detection module and a motion database. The motion recognition may divide an image (e.g., continuous frames) corresponding to a user's motion which is input through the motion input unit 120 into a background section and a hand section (e.g., spreading a finger or making a fist) and recognizes a continuous motion of a hand. If a user's motion is input, the control unit 160 stores a received image per frame and recognizes an object (e.g., a user's hand) of a user's motion using a stored frame. The motion detection module may detect an object by detecting at least one of a shape, a color or a motion of an object included in a frame and keeps track of a motion of the detected object. In addition, the control unit 160 may remove any noise except for motion of the object.

The control unit 160 determines a motion in accordance with a shape or a location of a tracked object. The control unit 160 determines a user's motion based on a shape change, a speed, a location and a direction of an object. A user's motion includes a grab, such as when a user makes a fist; pointing moves, such as moving a marked cursor with a user's hand; a slap, such as moving a user's hand in one direction faster than a predetermined pace; a shake, such as shaking a user's hand from left to right or from top to bottom; and rotation, such as rotating a user's hand. The technological feature of an exemplary embodiment may be applied to other motions not described in the above description, such as a spread, referring to spreading of a clenched fist.

As described above, the control unit 160 carries out a task of the electronic apparatus 100 using a recognized voice and motion. In particular, if a user's voice is input through the voice input unit 110, the control unit 160 recognizes a user's voice. The control unit 160 displays a recognized voice of a user as text on a text input window. If a deletion motion to delete input of a displayed text is input by a user through the motion input unit 120, the control unit 160 may control the display unit 153 to display a text of which input is deleted in accordance with the deletion motion.

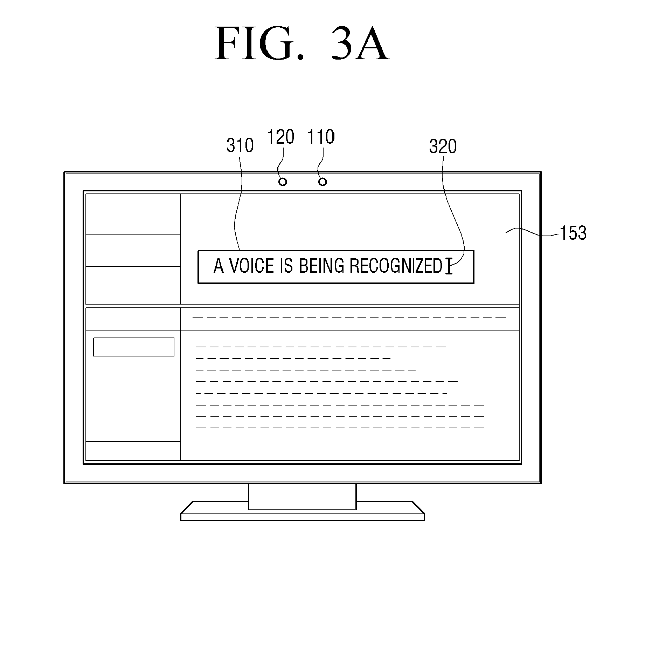

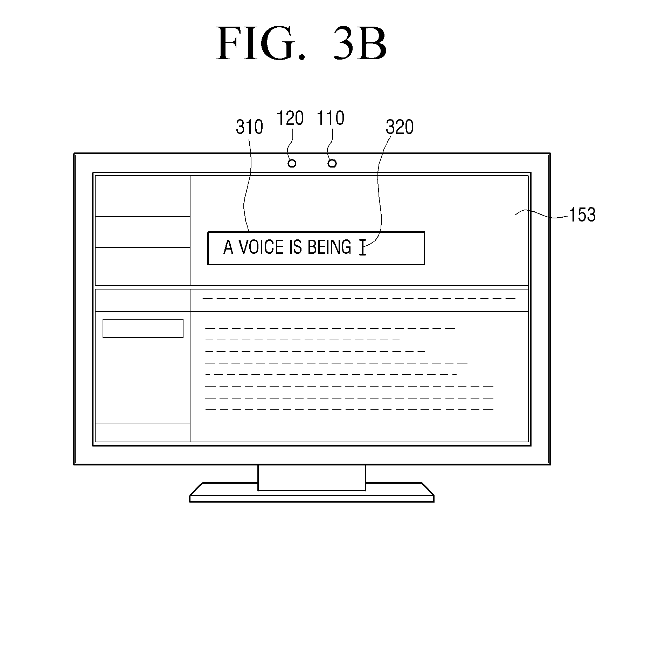

Hereinafter, referring to FIGS. 3A to 6D, there are provided exemplary embodiments of deleting text using a deletion motion. FIGS. 3A and 3B are views illustrating deleting a word according to an exemplary embodiment.

If a user's voice inputs "A voice is being recognized" through the voice input unit 110, the control unit 160 recognizes "A voice is being recognized" using a voice recognition module. As illustrated in FIG. 3A, the control unit 160 controls the display unit 153 to display a text of "A voice is being recognized" on the text input window 310. A cursor 320 is displayed at the end of the text of "A voice is being recognized."

As illustrated in FIG. 3B, if a deletion motion is input through the motion input unit 120 when a text of "A voice is being recognized" is displayed, the control unit 160 controls the display unit 153 to delete the latest input word of "recognized" and display "A voice is being." A deletion motion may be a motion of rotating a user's hand in a counterclockwise direction but is not limited thereto and other motions (e.g., a grab motion) may be a deletion motion. Also, a word may include a space between words.

In the above-described exemplary embodiment, when a deletion motion is input, the latest input word is deleted. Further, the cursor 320 is then positioned after the last word. However, this is merely exemplary and one of a latest input letter, number and sign may be deleted.

Hence, according to the above-described exemplary embodiment, the electronic apparatus 100 may delete input of a latest input word using a deletion motion.

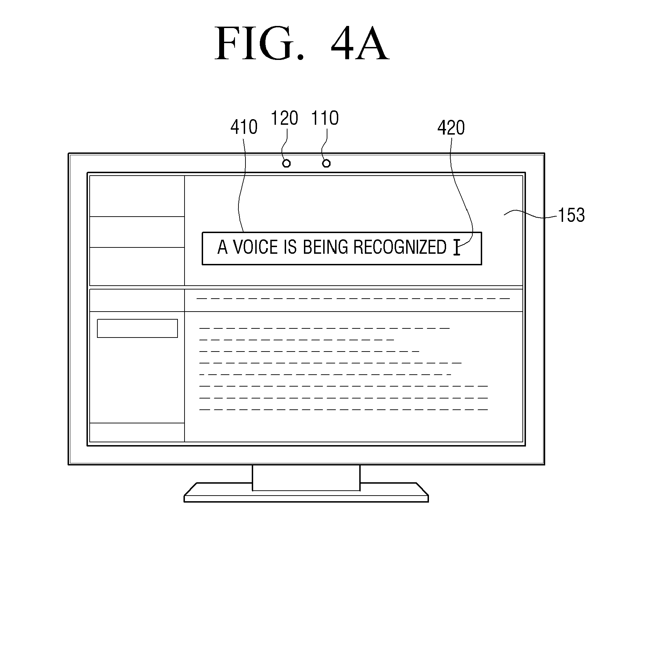

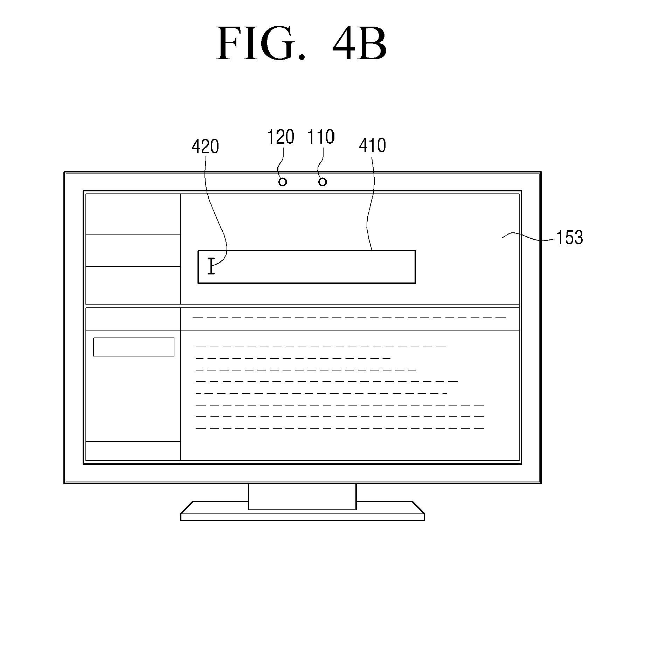

FIGS. 4A and 4B are views illustrating deletion of all text according to an exemplary embodiment.

If a user's voice inputs "A voice is being recognized" through the voice input unit 110, the control unit 160 recognizes "A voice is being recognized" using a voice recognition module. As illustrated in FIG. 4, the control unit 160 controls the display unit 153 to display "A voice is being recognized" on the text input window 410. A cursor 420 appears at the end of the text "A voice is being recognized."

As illustrated in FIG. 4B, if a deletion motion (e.g., rotating a hand in a counterclockwise direction) is input through the motion input unit 120 three consecutive times when a text "A voice is being recognized" is displayed, the control unit 160 controls the display unit 153 to delete all of the text on the text input window 410. The cursor 420 appears in the beginning of the text input area 410.

In the above-described exemplary embodiment, if a deletion motion is input three consecutive times, all of the text is deleted. However, this is merely exemplary and a deletion motion can be input more than three times In addition, if a motion (e.g., a shake motion) corresponding to a deletion motion for deleting all of the texts is input, deletion of all of the text may be executed.

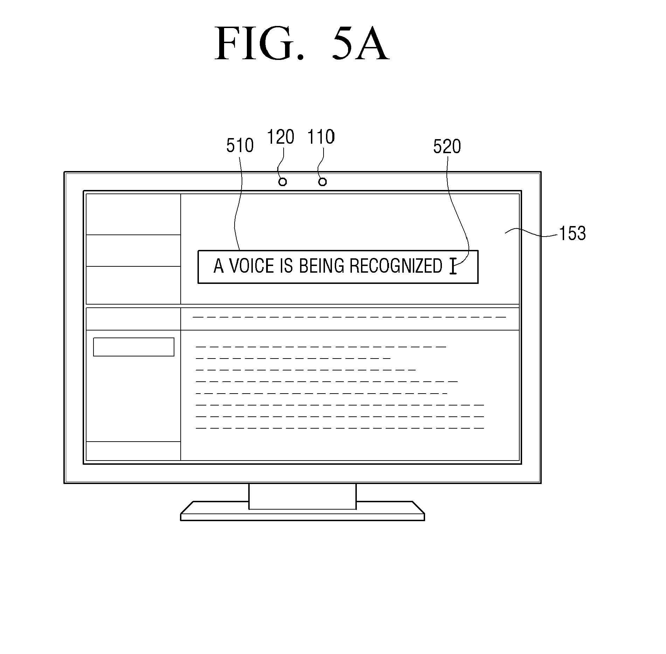

FIGS. 5A to 5C are views illustrating deletion of a selected area of text according to an exemplary embodiment.

If a voice of a user inputs "A voice is being recognized" through the voice input unit 110, the control unit 160 recognizes "A voice is being recognized" using a voice recognition module. As illustrated in FIG. 5A, the control unit 160 controls the display unit 153 to display "A voice is being recognized" on the text input window 510.

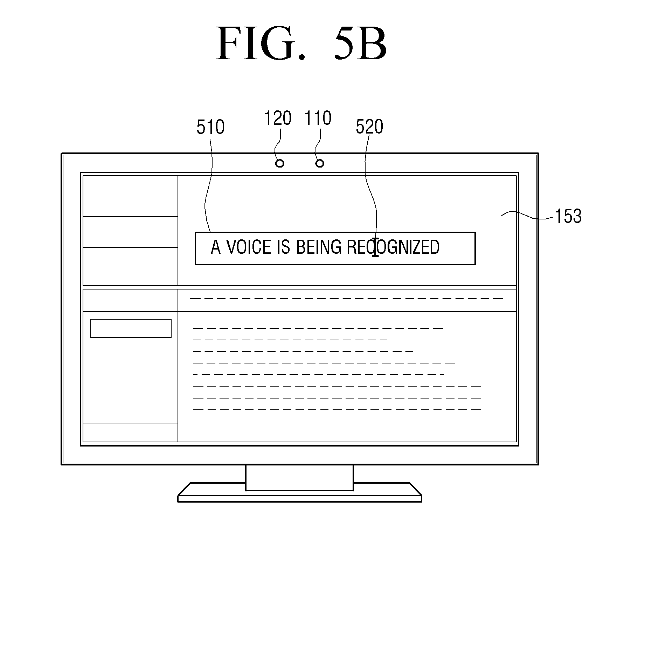

If a user's command to shift a location of the cursor 520 is input when "A voice is being recognized" is displayed, the control unit 160 shifts a location of the cursor 520 in accordance with a user's command. For instance, as illustrated in FIG. 5B, the control unit 160 may place the cursor 520 between "c" and "o" of "recognized". A user's command to shift a location of the cursor 520 may be input through a certain motion (e.g., a slap motion) or through an external device (e.g., a remote control).

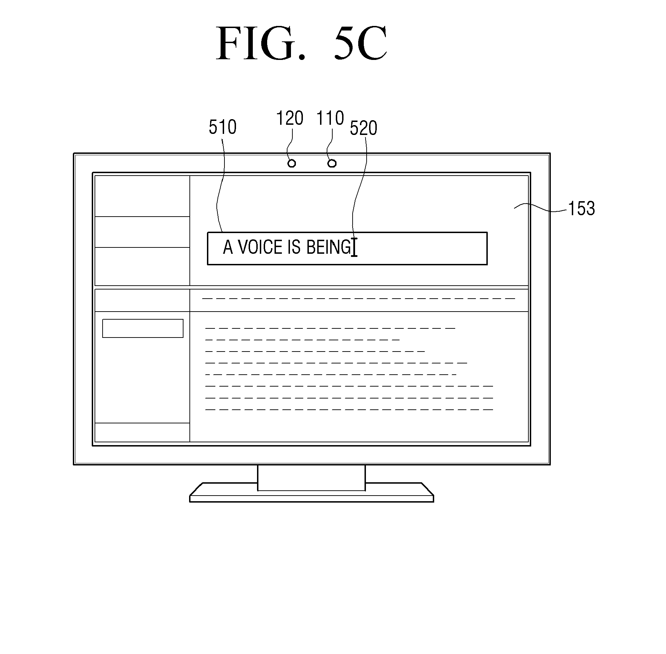

As illustrated in FIG. 5C, if a deletion motion (e.g., rotating a user's hand in a counterclockwise direction) is input through the motion input unit 120 when the cursor 520 is located in the middle of "recognition", the control unit 160 may control the display unit 153 to display "A voice is being" by deleting the word "recognized" where the cursor 520 is located.

If the cursor 520 is not located in the middle of a word, but at the beginning or at the end of a word, a word on the left side of the cursor 520 may be deleted. However, this is merely exemplary and a user may set the control unit 160 such that a word on the right side of the cursor 520 is deleted.

Hence, a user may delete an input text selectively by shifting a location of the cursor 520 on a word which a user wants to delete.

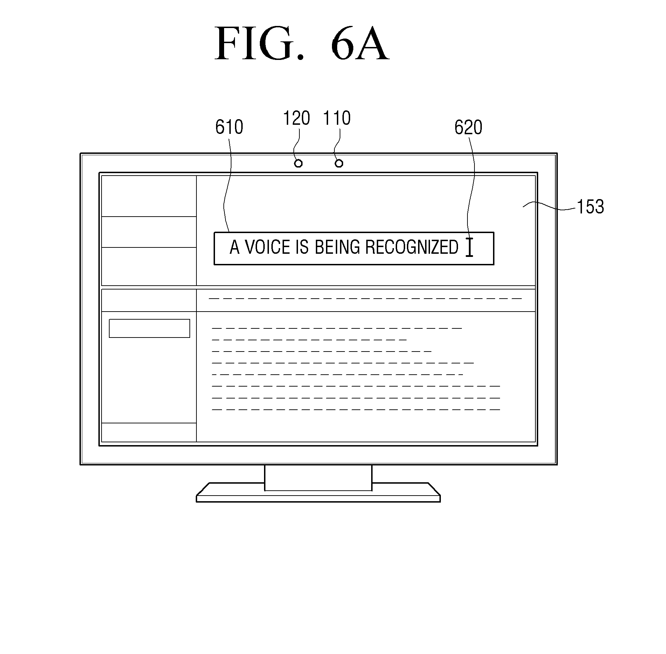

FIGS. 6A to 6D are views illustrating deletion of a selected area according to an exemplary embodiment.

If a user's voice inputs "A voice is being recognized" through the voice input unit 110, the control unit 160 recognizes "A voice is being recognized" using a voice recognition module. As illustrated in FIG. 6A, the control unit 160 controls the display unit 153 to display a text of "A voice is being recognized" on the text input window 610.

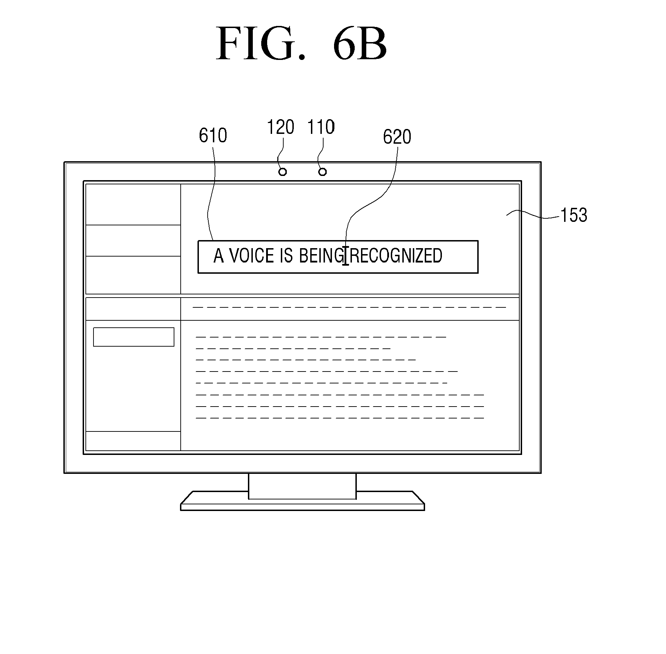

If a user's command to shift a location of the cursor 620 is input when "A voice is being recognized" is displayed on the text input window 610, the control unit 160 shifts a location of the cursor 620 in accordance with a user's command. For instance, as illustrated in FIG. 6B, the control unit 160 may place the cursor 620 on the right side of "being".

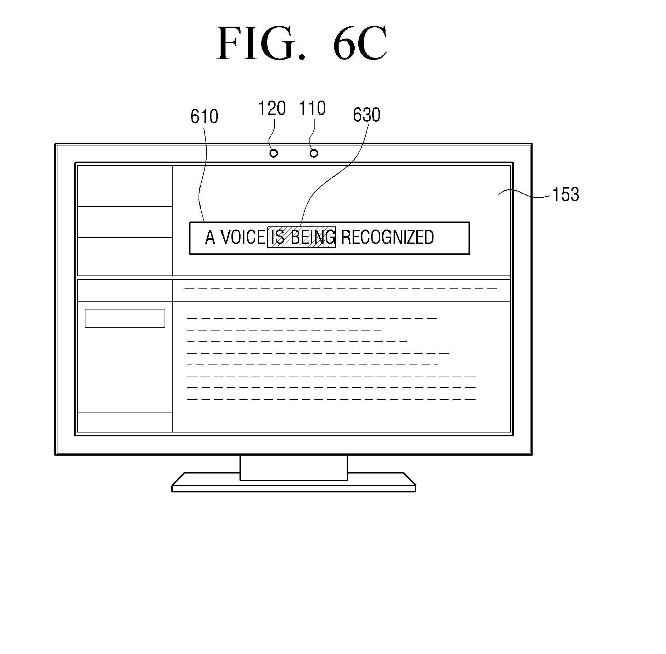

If a dragging motion is input when the cursor 620 is displayed on the right side of the word "being", the control unit 160 controls the display unit 153 to display an area selected by the dragging motion in a distinguishable way. For instance, as illustrated in FIG. 6C, if a dragging motion to select an area of text including "is" is input when the cursor 620 is displayed on the right side of the word "being", the control unit 160 controls the display unit 153 to highlight "is being". A dragging motion may be a motion of fixing a user's hand at a location of the cursor 620 for a predetermined period time (e.g., five seconds) and moving the hand in one of a left direction and a right direction, but is not limited thereto.

In the above-described exemplary embodiment, highlighting the selected area 630 of "is being" is merely exemplary and other ways (e.g., underlining or bold font) to display a selected area in a distinguishable way may be included.

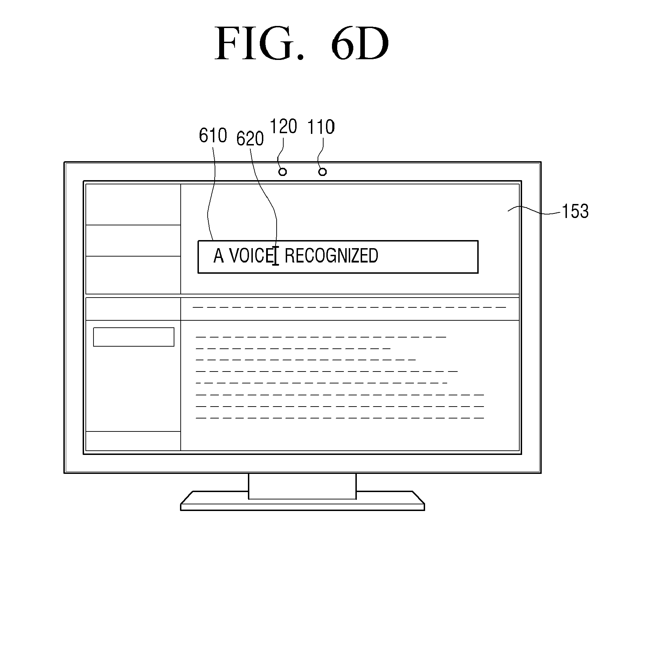

If a deletion motion (e.g., rotating a user's hand in a counterclockwise direction) is input through the motion input unit 120 when the area 630 selected by a dragging motion is displayed in a distinguishable way, the control unit 160 controls the display unit 153 to delete the selected area 630 and display "A voice recognized" as illustrated in FIG. 6D.

Hence, a user may delete an input text selectively by dragging an area of a text which a user wants to delete using motion recognition.

The exemplary embodiment described in FIGS. 3A to 6D may be applied not only to a text input window in a search web page, but also to other places where a text may be input. For instance, a text of a text message or a document may be deleted through a motion input as described above.

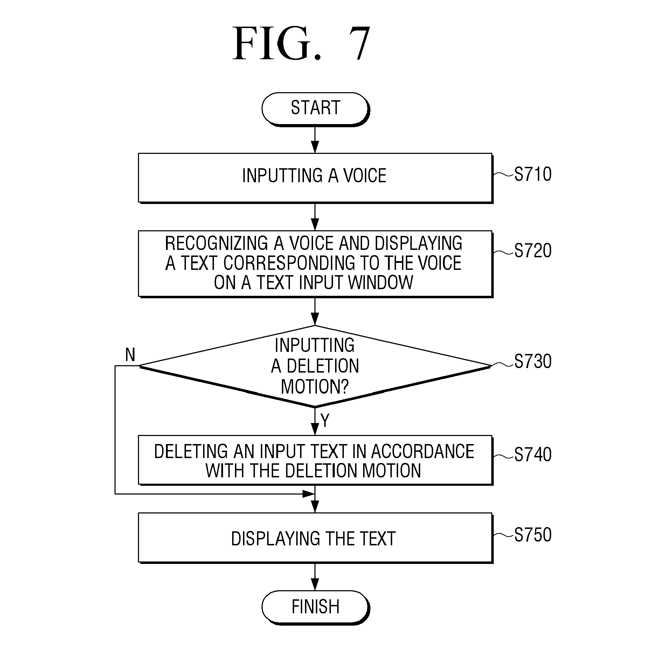

Hereinafter, referring to FIG. 7, a method for controlling the electronic apparatus 100 to delete an input text in accordance with a deletion motion will be explained.

The electronic apparatus 100 receives a voice input through the voice input unit 110 (S710). The electronic apparatus 100 may receive a user's voice through, for example, a microphone.

The electronic apparatus 100 recognizes a voice input through the voice input unit 110 and displays a text corresponding to the recognized voice on a text input window (S720). Specifically, the electronic apparatus 100 may recognize a user's voice using a voice recognition module, changes the input voice into text information, and displays the changed text information on a text input window.

The electronic apparatus 100 determines whether a deletion motion is input through the motion input unit 120 (S730). A deletion motion may be a motion of rotating a user's hand in a counterclockwise direction, but is not limited thereto.

If a deletion motion is input (S730-Y), the electronic apparatus 100 deletes an input text in accordance with the deletion motion (S740). For instance, as illustrated in FIGS. 3A to 6D, the electronic apparatus 100 may delete a latest input word (a letter, a sign or a number), a word where a cursor is located, a word selected by a dragging and a word as a whole. The examples of deleting an input text have been described in great detail in FIGS. 3A to 6D through various exemplary embodiments so further details will not be provided.

The electronic apparatus 100 displays a text of which input is deleted in accordance with a deletion motion (S750).

With the above-described methods for controlling the electronic apparatus 100, a user may delete an input text through motion recognition more easily and conveniently.

Exemplary embodiments may be presented in a form of program commands, which may be executed by various computer tools, and be recorded in a computer readable medium. The computer readable medium may include program commands, data files and data structures, alone or in combination. Program files recorded in the medium may be specially designed for the exemplary embodiments or may be known to and used by those in the area of computer software.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method for controlling an electronic apparatus, the method comprising;
recognizing a voice signal that is input;
displaying text corresponding to the recognized voice signal on a display unit of the electronic apparatus; and
deleting selected text of the text displayed on the display unit in response to a deletion motion that is input while the text is displayed on the display unit.

2. The method as claimed in claim 1, wherein the deleting the selected text comprises:
if the deletion motion is input once, deleting a latest input word from among the text displayed on the display unit.

3. The method as claimed in claim 1, wherein the deleting the selected text comprises:
if the deletion motion is input once, deleting a latest input letter from among the text displayed on the display unit.

4. The method as claimed in claim 1, wherein the deleting the selected text comprises:
if the deletion motion is input a predetermined number of times corresponding to a number of words in the text, deleting all of the predetermined number of words in the text displayed on the display unit.

5. The method as claimed in claim 1, 2 or 4, wherein the deleting the selected text
comprises:
shifting a location of a cursor displayed in the text in accordance with an input; and
deleting a word according to the location of the cursor.

6. The method as claimed in any preceding claim, wherein the deleting the selected text
comprises:
shifting a location of a cursor displayed in the text in accordance with an input;
if a dragging motion is input at a location where the cursor is shifted, displaying an area of text selected by the dragging motion in a distinguishable way and
deleting the selected area of the text.

7. The method as claimed in claim 6, wherein the dragging motion comprises:
positioning a user's hand at a location of the cursor for a predetermined period of time and moving the user's hand in one of a left direction and a right direction to drag the cursor.

8. The method as claimed in any one of claims 1 to 7, wherein the deletion motion
comprises:
rotating a hand of a user in a counterclockwise direction.

9. An electronic apparatus, comprising;
a voice input unit configured to receive a voice and output a voice signal corresponding to the voice;
a motion input unit configured to receive a motion;
a display unit; and
a control unit which recognizes the voice signal output by the voice input unit, controls the display unit to display text corresponding to the recognized voice signal, and in response to a deletion motion that is input to the motion input unit while the text is displayed on the display unit, controls the display unit to delete selected text of the text displayed on the display unit

10. The apparatus as claimed in claim 9, wherein the control unit, if the deletion motion is input once, controls the display unit to delete a latest input word from among the text.

11. The apparatus as claimed in claim 9, wherein the control unit, if the deletion motion is input once, controls the display unit to delete a latest input letter from among the text.

12. The apparatus as claimed in claim 9 or 10, wherein the control unit, if the deletion motion is input predetermined number of times corresponding to a number of words in the text, controls the display unit to delete all of the number of the words of the text.

13. The apparatus as claimed in claim 9, 10 or 12, wherein the control unit, if a location of a cursor displayed in the text is shifted in accordance with an input and the deletion command is input, controls the display unit to delete a word at the location of the cursor.

14. The apparatus as claimed in any one of claims 9 to 13, wherein the control unit controls the display unit to shift a location of a cursor displayed in the text in accordance with an input, if a dragging motion is input at a location where the cursor is shifted, to display an area of text selected by the dragging motion in a distinguishable way and, if the deletion motion is input, to delete the selected area of the text.

15. The apparatus as claimed in any one of claims 9 to 14, wherein the deletion motion is rotating a hand of the user in a counterclockwise direction.
